# EUROPÄISCHE PATENTSCHRIFT

(11) **EP 2 032 726 B1**
(45) Veröffentlichungstag und Bekanntmachung des Hinweises auf die Patenterteilung: **22.08.2012**
(21) Anmeldenummer: 07730007.7
(22) Anmeldetag: 08.06.2007
(51) Int. Cl.: C22B 9/22, C21B 13/12, F27B 3/20, H05H 1/26, C21C 5/52, F27D 99/00, H05H 1/30, F27B 3/08, C22B 4/08, F27B 3/22

(54) **VERFAHREN UND OFEN ZUM SCHMELZEN VON STAHLSCHROTT**
METHOD AND FURNACE FOR MELTING STEEL SCRAP
PROCÉDÉ ET FOUR POUR FONDRE DES RIBLONS D'ACIER

(30) Priorität: 28.06.2006 DE 102006029724
(43) Veröffentlichungstag der Anmeldung: 11.03.2009
(73) Patentinhaber: SIEMENS AKTIENGESELLSCHAFT, 80333 München (DE)
(72) Erfinder: MATSCHULLAT, Thomas, 90542 Eckental (DE)
(86) Internationale Anmeldenummer: PCT/EP2007/055649
(87) Internationale Veröffentlichungsnummer: WO 2008/000608

(56) Entgegenhaltungen:
- EP-B1- 0 533 884
- US-A- 3 530 334
- US-A- 3 749 803
- DEMBOVSKY, VLADIMIR: "Plasma Metallurgy, The Principles" 1985, C. LAIRD FOR ELSEVIER , US, NEW YORK , XP002448568 Seite 376 - Seite 381 Abbildungen 7.23,7.24 Tabelle 7/12

## Beschreibung

Die Erfindung betrifft ein Verfahren zum Schmelzen von Stahlschrott sowie einen dafür geeigneten Schmelzofen. Ein großer Anteil des in der Industrie benötigten Stahls wird durch Aufschmelzen von Schrott unter Zuführung von elektrischer Energie hergestellt, wobei teilweise auch fossile Energien in die Schmelze eingebracht werden. Die Zuführung der elektrischen Energie erfolgt mit Hilfe von meist aus Kohlenstoff bestehenden Elektroden, wobei zwischen diesen und dem Schmelzbad Lichtbögen erzeugt werden. Dabei wird Elektrodenmaterial verbraucht, was die Stahlherstellung verteuert. Aus der US 3,530,334 A ist ein elektrodenloser Plasmabrenner zur Zuführung von Schmelzenergie in einem Ofen bekannt, der eine eine Heizzone bildende induktive Heizspule aufweist. Des Weiteren umfasst der Plasmabrenner ein Injektionsrohr, mit dem der Heizzone ein Arbeitsgas eingeblasen werden kann.

Aufgabe der Erfindung ist es, ein alternatives Verfahren zum Erschmelzen von Stahlschrott sowie einen dafür geeigneten Schmelzofen vorzuschlagen, die insbesondere eine kostengünstige Stahlherstellung ermöglichen.

Diese Aufgabe wird durch ein Verfahren nach Anspruch 1 und einen Schmelzofen nach Anspruch 7 gelöst. Bei einem erfindungsgemäßen Verfahren wird zur Zuführung von Schmelzenergie über einen Strömungskanal ein Arbeitsgas in den Ofen eingeblasen und dabei durch wenigstens einen elektrodenlosen Plasmabrenner geleitet, wobei die Erzeugung des Plasmas durch wenigstens eine den Strömungskanal koaxial umgreifende, eine Heizzone bildende induktive Heizspule erfolgt. Bei einer derartigen Verfahrensweise sind keine Elektroden vorhanden, welche durch Verschleiß die Herstellungskosten erhöhen können. Die Erhitzung des Stahlschrotts in den schmelzflüssigen Zustand erfolgt dadurch, dass das in den Ofeninnenraum eingeleitete Gas das elektrische Wechselfeld einer Induktionsspule durchströmt, wobei die Stärke des Feldes so gewählt ist, dass auch ohne Zünd- oder Pilotelektroden ein Gasdurchbruch und die Bildung eines Plasmas erfolgt. Dieses wird mit dem Gasstrom auf das zu schmelzende Material aufgebracht, wodurch dieses erhitzt und aufgeschmolzen wird.

Das Arbeitsgas, bei dem es sich um Luft, um mit Sauerstoff angereicherte Luft, um Stickstoff, um Sauerstoff oder dergleichen handelt, wird über ein sich zentral im Strömungskanal erstreckendes Injektionsrohr dem Zentrum der Heizzone zugeführt. Durch die zentrale Zuführung des Gases ergibt sich die Möglichkeit, dass durch den Randbereich des Strömungskanals ein Kühlgas geleitet werden kann, um etwa die den Strömungskanal auskleidende Wand insbesondere im Bereich der Heizzone vor allzu starker Überhitzung zu schützen. Als Kühlgas kann beispielsweise ein dem Arbeitsgas entsprechendes Gas verwendet werden.

Bei der Herstellung von Stahl werden vielfach aus im Hüttenwesen anfallende metallische und/oder oxidische Partikel enthaltende Stäube eingesetzt. Bei einer bevorzugten Verfahrensvariante erfolgt dies ganz einfach dadurch, dass einem durch den Plasmabrenner geleiteten Gas metallische und/oder oxidische Staubpartikel zugemischt werden. Vorteilhaft dabei ist, dass keine zusätzlichen Einrichtungen dazu erforderlich sind. Beim Einblasen von Staubpartikeln ist problematisch, dass diese den Schmelzprozess stören, indem sie beispielsweise zur Abkühlung der Schlacke führen. Indem aber die Staubpartikel durch den Plasmabrenner geleitet werden, werden sie erhitzt, wobei sie in einen schmelzflüssigen oder sogar gasförmigen Zustand übergehen können, was eine homogene Vermischung mit der Schmelze begünstigt. Außerdem sind sie in den genannten Zuständen sehr reaktionsfreudig, so dass sie durch gleichzeitige Zugabe eines Reduktionsmittels wie Kohlenstaub zum Metall reduziert werden können. Um ein stabiles Plasma aufrechtzuerhalten, ist es zweckmäßig, wenn die Staubpartikel mit einem vom Arbeitsgasstrom getrennten Gasstrom der Heizzone zugeführt werden. Auf diese Weise kann der Arbeitsgasstrom zur Steuerung des Plasmas unabhängig von der zugeführten Partikelmenge eingestellt werden.

Die Gas- bzw. Plasmazufuhr kann grundsätzlich durch einen beliebigen, sich oberhalb der Stahlschmelze befindlichen wandbereich des Schmelzofens erfolgen. Vorzugsweise wird jedoch ein Seitenwandbereich des Ofens gewählt. Vorteil dabei ist, dass eine Beschickung über die Deckelöffnung erfolgen kann, ohne dass dabei die Energiezufuhr unterbrochen werden muss, was zu einer Verringerung der Produktivität des Ofens führt. Durch die seitliche Energiezuführung wird außerdem die Energie gleichmäßiger auf das Schmelzgut verteilt.

Bei dem erfindungsgemäßen Schmelzofen sind Heizeinrichtungen vorgesehen, die eine Wand des Ofens, sei es eine Seitenwand oder einen Deckelbereich durchsetzen, wobei mit den Heizeinrichtungen Schmelzenergie zugeführt wird. Eine Heizeinrichtung umfasst einen rohrförmigen Körper, der einen Strömungskanal umschließt. Ein Längsabschnitt des Körpers ist als elektrodenloser Plasmabrenner ausgebildet, wobei dieser eine den Strömungskanal koaxial umfassende, eine Heizzone bildende induktive Heizspule aufweist. Zur Zuführung eines Arbeitsgases ist vorzugsweise zentral im Strömungskanal ein sich bis zur Heizzone oder in diese hinein erstreckendes Injektionsrohr vorhanden. Ein zum Zwecke der Zuführung eines Staubpartikel enthaltendes Gases dienen der separater Kanal wird dadurch gebildet, dass das Injektionsrohr von einem Gasführungsrohr koaxial und mit Radialabstand umfasst ist. Das Gasführungsrohr ist so bemessen, dass zwischen ihm und der Wand des Strömungskanals ein Ringkanal frei bleibt. Durch diesen kann ein Kühlgas geleitet werden um die Heizeinrichtung insbesondere im Bereich der Heizzone vor zu starker Erwärmung zu schützen. Als zusätzliche Maßnahme ist es vorteilhaft, wenn die Wand des Strömungskanals zumindest im Bereich der Heizzone außenseitig von einem Kühlkörper umfasst ist. Aus Gründen der Produktivitätssteigerung ist es zweckmäßig, wenn eine Heizeinrichtung nicht den Deckel, sondern den Seitenwandbereich des Ofens durchsetzt.

Die Erfindung wird nun unter Bezugnahme auf die beigefügten Zeichnungen näher erläutert. Es zeigen:
- FIG 1: eine schematische Schnittdarstellung eines Schmelzofens, bei dem Heizeinrichtungen durch den Ofendeckel hindurchgeführt sind,
- FIG 2: einen Schmelzofen in einer FIG 1 entsprechenden Darstellung, bei dem Heizeinrichtungen durch eine Seitenwand hindurchgeführt sind,

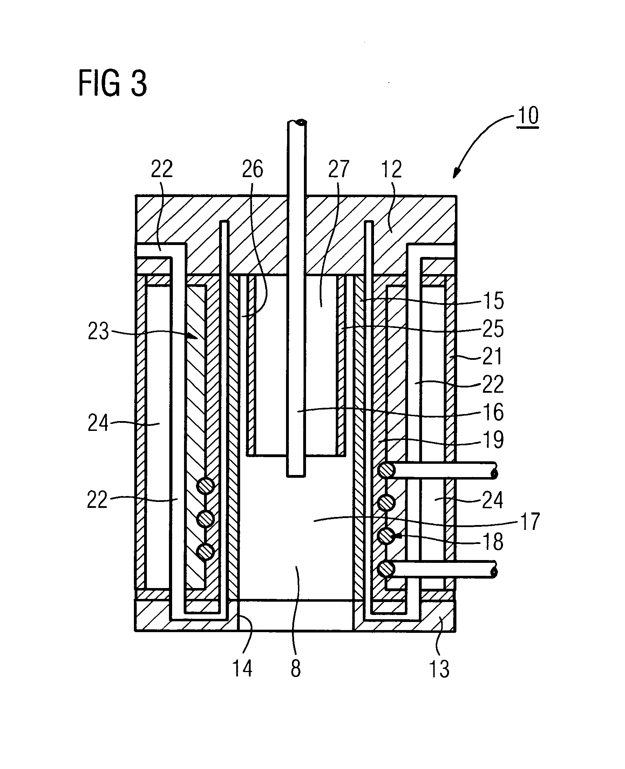

- FIG 3: in schematisierter Längsschnittdarstellung den Plasmabrenner einer Heizeinrichtung.

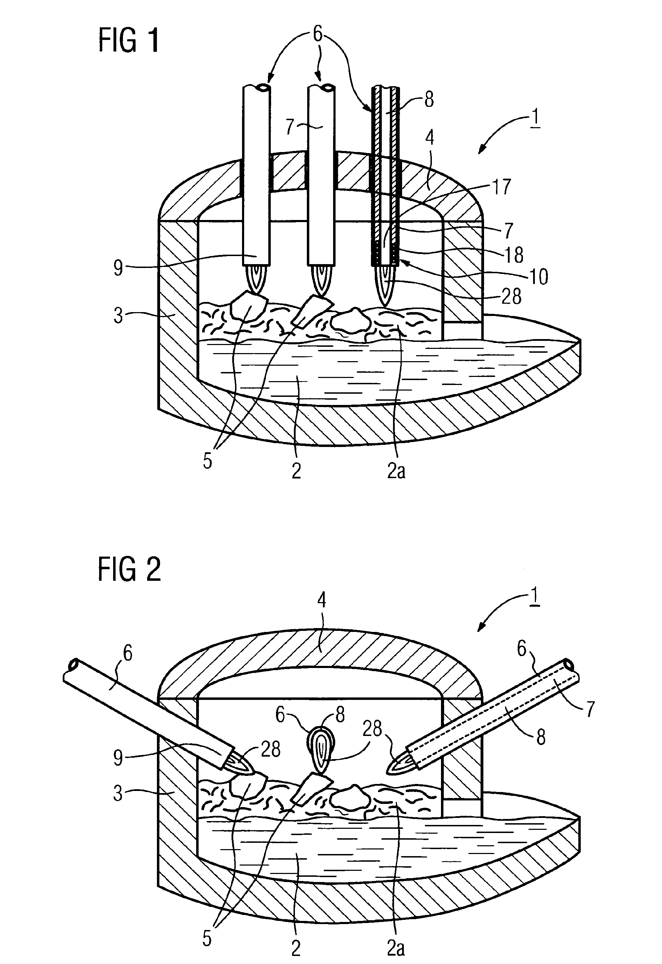

FIG 1 und 2 zeigen jeweils einen Schmelzofen 1, der einen unteren, eine Stahlschmelze 2 aufnehmenden Bereich, eine Seitenwand 3 und einen Deckel 4 aufweist. Im Betrieb bildet sich auf der Stahlschmelze 2 eine Schlacke 2a. In der Schlacke 2a sind Schrottteile 5 angedeutet, die bei abgenommenen Deckel 4 in den Ofen eingebracht werden. Bei dem Ausführungsbeispiel von FIG 1 ist der Deckel 4 von drei Heizeinrichtungen 6 durchsetzt. Eine Heizeinrichtung umfasst jeweils einen rohrförmigen Körper 7, welcher in Axialrichtung von einem Strömungskanal 8 durchsetzt ist. Bei dem Ausführungsbeispiel von FIG 2 durchsetzen mehrere über den Umfang des Ofens verteilte Heizeinrichtungen 6 die Seitenwand 2 des Schmelzofens 1. Bei dieser Ausgestaltung kann der Deckel 4 zum Beschicken des O-feninnenraums mit Schrottteilen 5 geöffnet werden, wobei die Heizeinrichtungen 6 in Betrieb bleiben können.

Die Heizeinrichtungen 6 sind in den Ausführungsformen gem. FIG 1 und 2 im Wesentlichen gleich ausgestaltet. Die rohrförmigen Körper 7 tragen an ihrem, dem Ofeninneren zugewandten bzw. im Ofen angeordneten Ende 9 einen elektrodenlosen Plasmabrenner 10. Dieser ist im Wesentlichen ein rohrabschnittförmiges Teil, das oberseits eine Platte, nämlich einen Gasverteiler 12 trägt. Unserseits, also an der dem Ofeninneren bzw. einer dort vorhandenen Metallschmelze 2 zugewandten Seite trägt er eine Abschlussplatte 13, die von einer zentralen Austrittsöffnung 14 durchsetzt ist. Der Strömungskanal 8 des rohrförmigen Körpers 7 setzt sich über Bohrungen (nicht dargestellt) im Gasverteiler 12 in den Innenraum eines beispielsweise aus einem keramischen Material bestehenden Hüllrohres 15 fort, welches sich vom Gasverteiler 12 bis zur Abschlussplatte 13 erstreckt. Im Strömungskanal 8 ist zentral und sich in dessen Längsrichtung erstreckend ein Injektionsrohr 16 angeordnet, welches den Gasverteiler 12 durchgreift und sich bis zu einer Heizzone 17 des Plasmabrenners 10 erstreckt. Die Heizzone 17 wird von einer induktiven Heizspule 18 gebildet, welche die Heizzone 17 bzw. den sich dort befindlichen Abschnitt des Strömungskanals 8 koaxial umgibt. Die Heizspule 18 ist an einem Spulenträger 19 fixiert, welcher das Hüllrohr 15 koaxial umfasst. Der Spulenträger 19 ist Teil eines von Wasserkanälen 22 durchzogenen Kühlkörpers 23. Die Wasserkanäle 22 erstrecken sich teilweise auch in den Gasverteiler 12 und in die Abschlussplatte 13 hinein. An die Umfangswand 21 des Kühlkörpers 23 schließt sich radial nach innen ein hohlzylinderförmiger Raum 24 an, in dem ein Isoliergas eingeschlossen ist.

Durch das Injektionsrohr 16 wird ein Arbeitsgas, beispielsweise Luft, einem zentralen Bereich der Heizzone 17 zugeführt. Das Injektionsrohr 16 ist von einem Gasführungsrohr 25 koaxial und mit Radialabstand umgriffen. Das Gasführungsrohr 25 ist so bemessen, dass zwischen ihm und dem Hüllrohr 15 ein Ringkanal 26 gebildet wird. Durch den Ringkanal 26 kann über eine Bohrung (nicht sichtbar) im Gasverteiler 12 ein Kühlgas zugeführt werden, das entlang der Innenwandung des Hüllrohres 15 strömt und dieses vor Überhitzung schützt. Neben der Bildung eines zur Zuführung eines Kühlgases dienenden Ringkanals 26 dient das Gasführungsrohr 25 auch dazu, ein mit Staubpartikeln beladenes Trägergas der Heizzone 17 bzw. einem dort vorhandenen Plasma zuzuführen. Das Plasma hat eine Wärmeleistung von bis zu 100 MW und ist in einem Temperaturbereich bis zu 12000 K regelbar. Die Partikel können bis zum schmelzflüssigen oder dampfförmigen Zustand erhitzt werden und werden zusammen mit der die Austrittsöffnung 14 verlassenden Plasmaflamme 28 in die Schlacke 3 bzw. in die Metallschmelze 2 eingetragen.

## Patentansprüche

1. Verfahren zum Erschmelzen von Stahlschrott in einem Ofen, bei dem zur Zuführung von Schmelzenergie über einen Strömungskanal (8) ein Arbeitsgas in den Ofen eingeblasen und dabei durch wenigstens einen elektrodenlosen Plasmabrenner (10) geleitet wird, wobei die Erzeugung des Plasmas durch wenigstens eine den Strömungskanal (8) koaxial umgreifende, eine Heizzone (17) bildende induktive Heizspule (18) erfolgt, wobei das Arbeitsgas der Heizzone (17) innerhalb eines Gasführungsrohres (25) zugeführt wird, und bei dem durch einen radial außen liegenden Bereich des Strömungskanals (8) ein das Gasführungsrohr (25) kühlendes Kühlgas geleitet wird.

2. Verfahren nach Anspruch 1, bei dem als Kühlgas ein dem Arbeitsgas entsprechendes Gas verwendet wird.

3. Verfahren nach Anspruch 1 oder 2, bei dem das Arbeitsgas über ein sich zentral im Strömungskanal (8) erstreckendes Injektionsrohr (16) dem Zentrum der Heizzone (17) zugeführt wird.

4. Verfahren nach einem der vorhergehenden Ansprüche, bei dem einem durch den Plasmabrenner (10) geleiteten Gas metallische und/oder oxidische Staubpartikel zugemischt werden.

5. Verfahren nach Anspruch 4, bei dem die Staubpartikel mit einem vom Arbeitsgasstrom getrennten Gasstrom der Heizzone (17) zugeführt werden.

6. Verfahren nach einem der vorhergehenden Ansprüche, bei dem die Gaszufuhr über einen Seitenwandbereich (3) des Ofens erfolgt.

7. Schmelzofen zum Erschmelzen von Schrott, mit wenigstens einer eine Wand des Ofens durchsetzenden Heizeinrichtung (6) zur Zuführung von Schmelzenergie, mit folgender weiterer Ausgestaltung:
- die Heizeinrichtung umfasst einen rohrförmigen Körper (7), der einen Strömungskanal (8) umschließt,
- ein Längsabschnitt des rohrförmigen Körpers (7) ist als elektrodenloser Plasmabrenner (10) ausgebildet, wobei dieser eine den Strömungskanal (8) koaxial umfassende, eine Heizzone (17) bildende induktive Heizspule (18) aufweist,
- zentral im Strömungskanal (8) ist ein sich bis zur Heizzone (17) oder in diese hinein erstreckendes Injektionsrohr (16) angeordnet,
- das Injektionsrohr (16) ist von einem Gasführungsrohr (25) koaxial und mit Radialabstand umfasst,
- zwischen dem Gasführungsrohr (25) und der Wand des Strömungskanals (8) ist ein Ringkanal (26) zur Zuführung eines Kühlgases vorhanden.

## Claims

1. Method for smelting steel scrap in a furnace, in which a working gas is blown into the furnace by way of a flow channel (8) to supply melting energy and in this process is guided through at least one electrodeless plasma torch (10), the plasma being produced by at least one inductive heating coil (18), which encloses the flow channel (8) coaxially and forms a heating zone (17), the working gas being supplied to the heating zone (17) within a gas guiding pipe (25), and in which a cooling gas cooling the gas guiding pipe (25) is guided through a radially outer region of the flow channel (8).

2. Method according to claim 1, in which a gas corresponding to the working gas is used as the cooling gas.

3. Method according to claim 1 or 2, in which the working gas is supplied to the centre of the heating zone (17) by way of an injection pipe (16) extending in a central manner in the flow channel (8).

4. Method according to one of the preceding claims, in which metallic and/or oxidic dust particles are mixed in with a gas guided through the plasma torch (10).

5. Method according to claim 4, in which the dust particles are supplied to the heating zone (17) by means of a gas flow that is separate from the working gas flow.

6. Method according to one of the preceding claims, in which the gas is supplied by way of a side wall region (3) of the furnace.

7. Melting furnace for smelting scrap, with at least one heating facility (6) extending through a wall of the furnace to supply melting energy, with the following further embodiment:
- the heating facility comprises a tubular body (7), which encloses a flow channel (8),
- a longitudinal section of the tubular body (7) is configured as an electrodeless plasma torch (10), having an inductive heating coil (18), which encloses the flow channel (8) coaxially and forms a heating zone (17),
- an injection pipe (16) extending up to the heating zone (17) or into it is disposed in a central manner in the flow channel (8),
- the injection pipe (16) is enclosed by a gas guiding pipe (25) coaxially and at a radial distance,
- an annular channel (26) is present between the gas guiding pipe (25) and the wall of the flow channel (8) to supply a cooling gas.

## Revendications

1. Procédé de fusion de riblons d'acier dans un four, dans lequel, pour l'apport d'énergie de fusion, on insuffle dans le four un gaz de travail par un canal ( 8 ) d'écoulement et on le fait passer ainsi dans au moins un brûleur à plasma sans électrode, la production du plasma s'effectuant par au moins une bobine ( 18 ) de chauffage par induction entourant coaxialement le canal ( 8 ) d'écoulement et formant une zone ( 17 ) de chauffage, le gaz de travail étant envoyé à la zone ( 17 ) de chauffage dans un tuyau ( 25 ) de conduite de gaz, et dans lequel on envoie un gaz de refroidissement refroidissant le tuyau ( 25 ) de conduite de gaz par une zone du canal ( 8 ) d'écoulement se trouvant à l'extérieur radialement.

2. Procédé suivant la revendication 1, **caractérisé en ce qu'**on utilise comme gaz de refroidissement un gaz correspondant au gaz de travail.

3. Procédé suivant la revendication 1 ou 2, dans lequel on envoie le gaz de travail au centre de la zone ( 17 ) de chauffage par un tuyau ( 16 ) d'injection s'étendant centralement dans le canal ( 8 ) d'écoulement.

4. Procédé suivant l'une des revendications précédentes, dans lequel on mélange des particules de poussière métalliques et/ou d'oxyde au gaz envoyé dans le brûleur ( 10 ) à plasma.

5. Procédé suivant la revendication 4, dans lequel on envoie à la zone ( 17 ) de chauffage les particules de poussière par un courant gazeux distinct du courant de gaz de travail.

6. Procédé suivant l'une des revendications précédentes, dans lequel l'envoi du gaz s'effectue par une zone ( 3 ) de paroi latérale du four.

7. Four de fusion de riblons, comprenant au moins un dispositif ( 6 ) de chauffage traversant une paroi du four pour apporter de l'énergie de fusion et ayant les autres caractéristiques suivantes :
- le dispositif de chauffage comprend un corps ( 7 ) tubulaire, qui entoure un canal ( 8 ) d'écoulement,
- un tronçon longitudinal du corps ( 7 ) tubulaire est constitué en brûleur à plasma ( 10 ) sans électrode, celui-ci comportant une bobine ( 18 ) de chauffage par induction entourant coaxialement le canal ( 8 ) d'écoulement et formant une zone ( 17 ) de chauffage,
- un tuyau ( 16 ) d'injection s'étendant jusqu'à la zone ( 17 ) de chauffage ou y pénétrant est disposé d'une manière centrée dans le canal ( 8 ) d'écoulement,
- le tuyau ( 16 ) d'injection est entouré coaxialement et à distance radiale d'un tuyau ( 25 ) de conduite de gaz,
- un canal ( 26 ) annulaire d'apport d'un gaz de refroidissement est présent entre le tuyau ( 25 ) de conduite de gaz et la paroi du canal ( 8 ) d'écoulement.
